# EUROPÄISCHE PATENTSCHRIFT

(11) **EP 1 307 974 B1**
(45) Veröffentlichungstag und Bekanntmachung des Hinweises auf die Patenterteilung: **26.09.2007**
(21) Anmeldenummer: 01955263.7
(22) Anmeldetag: 20.07.2001
(51) Int. Cl.: H04B 7/005

(54) **VERFAHREN UND BASISSTATION FÜR DIE DATENÜBERTRAGUNG VON UND ZU EINEN ZEITSCHLITZ GEMEINSAM NUTZENDEN TEILNEHMERSTATIONEN**
METHOD AND BASE STATION FOR DATA TRANSMISSION FROM AND TO USER STATIONS USING A COMMON TIMESLOT
PROCEDE ET STATION DE BASE PERMETTANT LA TRANSMISSION DE DONNEES DE ET VERS DES STATIONS D'ABONNE UTILISANT UN CRENEAU DE TEMPS COMMUN

(30) Priorität: 08.08.2000 DE 10038667
(43) Veröffentlichungstag der Anmeldung: 07.05.2003
(73) Patentinhaber: NOKIA SIEMENS NETWORKS GMBH & CO. KG, 81541 München (DE)
(72) Erfinder: SCHUHMACHER, Friedrich, 81373 München (DE); REHFUESS, Ulrich, 81475 München (DE); BALL, Carsten, 81373 München (DE)
(86) Internationale Anmeldenummer: PCT/DE2001/002738
(87) Internationale Veröffentlichungsnummer: WO 2002/013416

(56) Entgegenhaltungen:
- US-A- 6 072 792

## Beschreibung

Die vorliegende Erfindung betrifft ein Verfahren für die Steuerung der Übertragung von Daten zwischen einer Basisstation eines Funk-Kommunikationssystems und einer Mehrzahl.von Teilnehmerstationen, die einen gleichen Zeitschlitz für die Kommunikation mit der Basisstation nutzen sowie eine hierfür geeignete Basisstation.

Derartige Verfahren werden für die Übertragung von Datendiensten in Funk-Kommunikationssystemen eingesetzt. Die Rahmenstrukturen herkömmlicher Funk-Kommunikationssysteme wie etwa GSM sind von alters her an den Bedürfnissen der Sprachübertragung orientiert; das heißt ein Rahmen ist in eine regelmäßig wiederkehrende Folge von Zeitschlitzen unterteilt, wobei die Dauer eines Zeitschlitzes bzw. ihre Anzahl in einem Rahmen so bemessen ist, daß innerhalb eines Zeitschlitzes diejenige Menge an digitalisierten Sprachdaten übertragen werden kann, die der Dauer eines Rahmens (bei "Full Rate-Kommunikation") bzw. von zwei Rahmen (bei "Half Rate"-Kommunikation) entspricht. Im Unterschied zu Sprachübertragung ergeben sich bei der Übertragung von Datendiensten Datenraten, die im Laufe der Zeit stark schwanken können und Bruchteile oder ein (nicht notwendigerweise ganzzahliges) Vielfaches der Datenrate einer Sprachverbindung betragen können. Um auch solche Datendienste wirtschaftlich übertragen zu können, sind Verfahren entwickelt worden, die die Nutzung eines jeweils durch einen gleichen Zeitschlitz aufeinander folgender Rahmen definierten Übertragungskanals im Zeitmultiplex durch mehrere Teilnehmerstationen erlauben. Die Zuteilung des Kanals erfolgt hier paketweise: In dem gemeinsam benutzten Zeitschlitz jedes Rahmens wird ein Paket von der Basisstation ausgestrahlt, das Nutzdaten, die für eine Teilnehmerstation bestimmt sind, sowie die Adresse (Temporary Flow Identifier, TFI) der Teilnehmerstation enthält, für die die Daten bestimmt sind. Zusätzlich enthält das Paket die Adresse (Uplink State Flag, USF) der Teilnehmerstation, die das nächste Paket auf diesem Kanal in Uplink-Richtung (Teilnehmerstation zur Basisstation) übertragen darf.

Damit eine Teilnehmerstation erkennen kann, wann sie auf dem gemeinsam benutzten Kanal senden darf, muß sie die Uplink State Flags aller von der Basisstation in dem Kanal ausgestrahlten Pakete mit genügender Sicherheit richtig decodieren können. Das Uplink State Flag muß daher in der gesamten Zelle der Basisstation mit hinreichender Güte empfangbar sein.

Diese Notwendigkeit steht im Konflikt mit der Bemühung, durch Verwendung sogenannter adaptiver Antennen oder Smart Antennas die Gesamtsendeleistung einer Basisstation und damit die Gefahr von Störungen in Nachbarzellen zu reduzieren und/oder den Nutz-Störleistungsabstand (C/I) an einer Teilnehmerstation zu verbessern. Diese adaptiven Antennen weisen Richtcharakteristiken auf, die wesentlich schmaler als die einer herkömmlichen Sektorantenne sind, und die gezielt in die Richtung eines Empfängers ausgerichtet werden können. Abseits von der Hauptkeule einer solchen Richtcharakteristik ist die Sendeleistung der adaptiven Antenne jedoch sehr gering bzw. örtlich sogar 0. Dies bedeutet, daß wenn eine adaptive Antenne zum Übertragen von Datendiensten an mehrere Teilnehmerstationen über einen im Multiplex benutzten Kanal verwendet wird, und die Richtcharakteristik der adaptiven Antenne jeweils auf die Teilnehmerstation ausgerichtet ist, die Empfänger des aktuellen Nutzdatenpakets sein soll, nicht gewährleistet werden kann, daß eine im Uplink State Flag bezeichnete Teilnehmerstation in der Lage ist, das Signal zu empfangen und zu decodieren.

Um dieses Problem zu umgehen, ist in GSM 04.60 ein als Fixed Allocation bezeichnetes Verfahren vorgeschlagen worden. Bei diesem Verfahren wird der Zeitschlitz für kurze Zeit, typischerweise aber für eine Vielzahl von Paketen, exklusiv einer Teilnehmerstation zur Verfügung gestellt. In diesem Fall kann zwar die Bündelwirkung adaptiver Antennen uneingeschränkt genutzt werden, allerdings ist damit ein erhöhter Signalisierungsaufwand für die Kanalzuteilung und zumindest ein teilweiser Verlust der Gewinne aus dem statistischen Multiplex verbunden. Ein solcher Ansatz ist insbesondere bei Applikationen wie WAP (Wireless Application Protocol) unökonomisch, bei denen jede Teilnehmerstation allenfalls für eine kleine Zahl von aufeinanderfolgenden Rahmen Zugriff auf den gemeinsam genutzten Kanal benötigt und dieser daher häufig von einer Teilnehmerstation auf eine andere umgeschaltet werden muß.

Ein anderer Lösungsansatz ist das Konzept der sogenannten Uplink-Granularität. Dieses Konzept läuft darauf hinaus, daß von jeweils vier aufeinanderfolgenden Downlink-Paketen nur das erste einen gültigen USF-Wert enthält, der der darin bezeichneten Teilnehmerstation jeweils für Zeitschlitze von vier aufeinanderfolgenden Rahmen das Recht gibt, an die Basisstation zu senden. Es muß daher lediglich der erste dieser vier Zeitschlitze ungebündelt in die gesamte Zelle ausgesendet werden, so daß er von allen den Kanal nutzenden Teilnehmerstationen empfangbar ist; die nachfolgenden drei Zeitschlitze können gebündelt ausgestrahlt werden. Auch dieser Lösungsansatz führt zu einer unvollständigen Nutzung der Übertragungskapazität des Kanals, da einer Teilnehmerstation auch dann vier Zeitschlitze zum Senden zugeteilt werden müssen, wenn die von ihr zu sendenden Daten in weniger Zeitschlitzen übertragen werden könnten.

Ein Beispiel ist aus US-6 072 792 bekannt.

Aufgabe der Erfindung ist, ein Verfahren für die Steuerung der Übertragung von Daten zwischen einer Basisstation und einer Mehrzahl von Teilnehmerstationen auf einem gemultiplexten Kanal anzugeben, das einen häufigen Wechsel der Zuteilung des Kanals an die einzelnen Teilnehmerstationen bei gleichzeitig effizienter Nutzung des Kanals erlaubt, und das dennoch einen Betrieb bei einer niedrigen mittleren Sendeleistung zuläßt. Weiterhin soll eine mit dem Verfahren kompatible Basisstation geschaffen werden.

Diese Aufgabe wird durch das Verfahren mit den Merkmalen des Patentanspruchs 1 bzw. die Basisstation mit den Merkmalen des Patentanspruchs 10 oder 11 gelöst.

Das erfindungsgemäße Verfahren nutzt die Tatsache, daß bei den existierenden oder im Normungsprozeß befindlichen Funk-Kommunikationssystemen wie etwa insbesondere GPRS, EGPRS und GERAN Steuerinformationen wie etwa das Uplink State Flag USF, das die Bezeichnung der Teilnehmerstation, die in einem nachfolgenden Rahmen senden darf, und/oder die von der Basisstation festgelegte Sendeleistung dieser Teilnehmerstation mit einem stärkeren Fehlerschutz codiert ist als die Nutzdaten, so daß diese Steuerinformation von einer Teilnehmerstation auch dann noch korrekt decodierbar ist, wenn die Empfangssignalstärke zu einer Codierung der Nutzdaten nicht mehr ausreicht. Es wird deshalb vorgeschlagen, zusätzlich zu einem ersten Funksignal, das in Richtung einer Teilnehmerstation gebündelt ist, für die die Nutzdaten des aktuellen Zeitschlitzes bestimmt sind, ein zweites Funksignal auszustrahlen, dessen Sendeleistung in Richtung wenigstens einer anderen Teilnehmerstation, für die die Steuerinformation bestimmt ist, ausreicht, um dieser einen korrekten Empfang der Steuerinformation zu ermöglichen. Dabei genügt für die Sendeleistung des zweiten Funksignals ein kleiner Bruchteil der Sendeleistung des ersten Signals. Infolge seiner geringen Leistung führt das zweite Signal nicht zu merklichen Störungen in Nachbarzellen, andererseits entfällt die Notwendigkeit, Zeitschlitze, die ein gültiges Uplink State Flag enthalten, mit der zum Empfangen der Nutzdaten erforderlichen hohen Sendeleistung ungebündelt und für alle Teilnehmerstationen der Zelle auszustrahlen.

Vorzugsweise ist die Sendeleistung des zweiten Funksignals gegenüber der des ersten soweit reduziert, daß sie in der gesamten von der Basisstation abgedeckten Zelle für eine korrekte Decodierung der Steuerinformation mit hinreichender Sicherheit genügt, nicht aber für eine Decodierung der ebenfalls in dem zweiten Funksignal enthaltenen Nutzdaten, die für die in der Steuerinformation bezeichnete Teilnehmerstation ohnedies nicht von Interesse sind.

Das zweite Funksignal kann ungebündelt ausgestrahlt werden, das heißt zum Ausstrahlen dieses Signals kann eine Antenne mit nicht veränderbarer Richtcharakteristik verwendet werden, die die gesamte Zelle der Basisstation abdeckt.

Alternativ kann das zweite Funksignal in Richtung der im Uplink State Flag bezeichneten Teilnehmerstation ausgestrahlt werden. In einem solchen Fall kann eine gleiche Antennenanordnung der Basisstation zum Ausstrahlen des ersten und des zweiten Funksignals genutzt werden.

In beiden Fällen ist die Sendeleistung in Richtung der zweiten Teilnehmerstation vorzugsweise um 3 dB bis 15 dB, geringer als in Richtung der ersten Teilnehmerstation. Diese Werte sind selbstverständlich von den für Uplink State Flag und Nutzdaten verwendeten Codierungen abhängig und sind für die derzeit bei GPRS, EGPRS und GERAN verwendeten Codes geeignet. Für GPRS CS1/CS2 ist die Sendeleistung in Richtung der zweiten Teilnehmerstation vorzugsweise um ca. 5dB geringer, bei anderen Codierungen können größere Unterschiede zweckmäßig sein.

Um destruktive Interferenzen zwischen den zwei Funksignalen zu vermeiden, sind beide zweckmäßigerweise orthogonal zueinander polarisiert.

Falls beide Funksignale gerichtet sind, kann es auch praktikabel und zweckmäßig sein, wenn sie die gleiche Polarisierung aufweisen.

Weitere Merkmale und Vorteile der Erfindung ergeben sich aus der nachfolgenden Beschreibung von Ausführungsbeispielen mit Bezug auf die beigefügten Figuren.

Es zeigen:
Fig. 1 ein schematisches Blockdiagramm eines Funk-Kommunikationssystems, in dem die vorliegende Erfindung anwendbar ist;
Fig. 2 ein Blockdiagramm des Sendeteils einer Basisstation;
Fig. 3 eine Richtcharakteristik des Sendeteils;
Fig. 4 eine zweite Ausgestaltung des Sendeteils der Basisstation;
Fig. 5 eine dritte Ausgestaltung des Sendeteils der Basisstation; und
Fig. 6 eine Richtcharakteristik des Sendeteils.

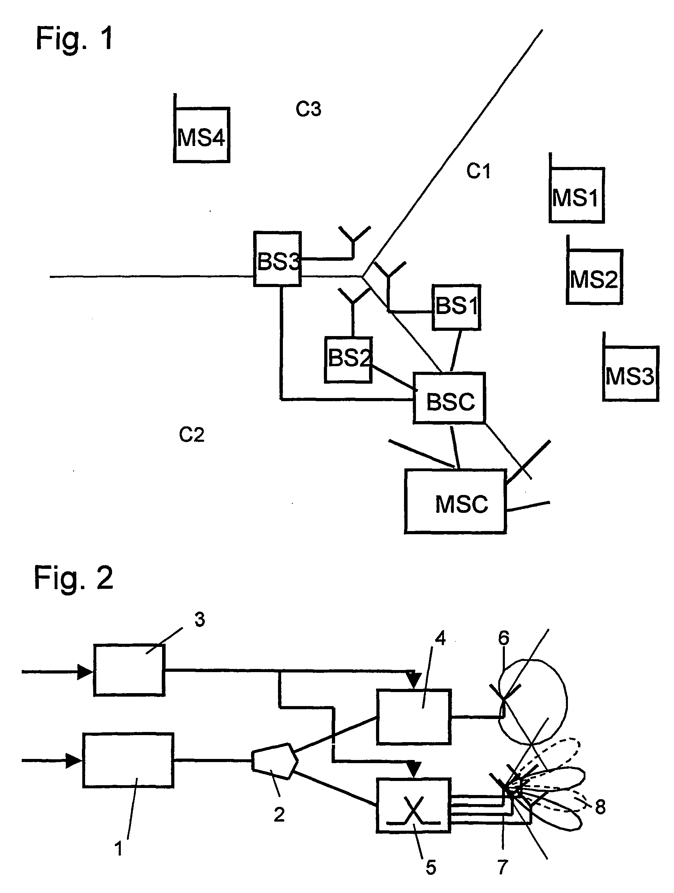

Fig. 1 zeigt die Struktur eines Funk-Kommunikationssystems, bei dem das erfindungsgemäße Verfahren anwendbar ist. Das Funk-Kommunikationsnetz umfaßt eine Vielzahl von Mobilvermittlungsstellen MSC, von denen nur eine in der Figur dargestellt ist, die untereinander vernetzt sind bzw. den Zugang zu anderen Netzen, etwa einem Festnetz und/oder einem zweiten Funk-Kommunikationsnetz herstellen. Weiter sind diese Mobilvermittlungsstellen MSC mit zumindest einem Basisstationscontroller BSC verbunden. Jeder Basisstationscontroller BSC ermöglicht wiederum eine Verbindung zu wenigstens einer Basisstation, hier Basisstationen BS1, BS2, BS3. Jede solche Basisstation kann über eine Funkschnittstelle eine Nachrichtenverbindung zu Teilnehmerstationen MS1, MS2, ... aufbauen, die sich in der entsprechenden Zelle C1, C2, C3 aufhalten.

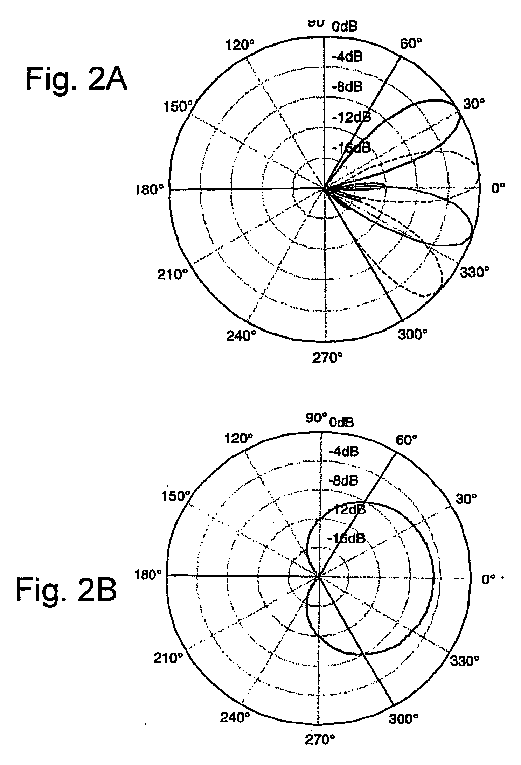

Fig. 2 zeigt ein Blockdiagramm des Sendeteils der Basisstation BS1. Ein Hochfrequenzverstärker 1 liefert ein mit den an die Teilnehmerstationen zu sendenden Nutzdaten und mit Steuerinformation moduliertes Hochfrequenzsignal an einen Leistungsteiler 2. Dieser verteilt die Sendeleistung in einem festen, vorgegebenen Verhältnis an seine zwei Ausgänge, an die jeweils ein Polarisationswählschalter 4 und eine Verzögerungsmatrix 5 angeschlossen ist, die jeweils durch eine Antennensteuereinheit 3 gesteuert sind. Das. Teilungsverhältnis ist in Abhängigkeit von den für die Nutzdaten und die Steuerinformation verwendeten Codierungen festgelegt.

Der Polarisationswählschalter 4 empfängt im Falle eines GPRS-Signals ca. ein Viertel der Eingangsleistung des Leistungsteilers 2. Seine zwei Ausgänge liefern das Hochfrequenzsignal jeweils an eines von zwei orthogonal polarisierenden Sendeelementen einer ungebündelten Antenne 6, hier einer Sektorantenne, deren Richtcharakteristik die gesamte Zelle C1 der Basisstation BS1 überstreicht. Je nach Stellung des Polarisationswählschalters 4 sendet die Antenne 6 mit einer Polarisierung von plus oder minus 45°. Die Richtcharakteristik dieser Antenne ist in Fig. 2A gezeigt.

Die Verzögerungsmatrix 5 empfängt die restlichen drei Viertel der Eingangsleistung des Leistungsteilers 2. Sie ist eine Butler-Matrix, die eine adaptive Antenne 7 versorgt. Die adaptive Antenne 7 ist in der Lage, je nach den von der Antennensteuereinheit 3 an der Butler-Matrix 5 für verschiedene Sendeelemente der Antenne 7 eingestellten Verzögerungen mit einer Mehrzahl von verschiedenen Richtcharakteristiken zu senden, die jeweils die Form einer schmalen Keule 8 mit unterschiedlichen Hauptausbreitungsrichtungen haben wie in Fig. 2B gezeigt.

Die Antennensteuereinheit 3 steuert den Schalter 4 und die Butler-Matrix 5 derart, daß die Polarisationen der von den Antennen 6, 7 abgestrahlten Funksignale jeweils orthogonal sind. Von einem Burst der Funksignale zum nächsten wechselt sie jeweils die Polarisationen der zwei Signale.

Die Antennensteuereinheit 3 kennt zu jeder in der Zelle C1 aktiven Teilnehmerstation MS den Azimutwinkel, den sie in Bezug auf die Basisstation einnimmt. Um ein Datenpaket an eine Teilnehmerstation MS zu senden, steuert sie daher die Butler-Matrix 5 derart an, daß die adaptive Antenne 7 diejenige der verschiedenen durch die Butler-Matrix vorgegebenen Keulen 8 erzeugt, deren Hauptausbreitungsrichtung am besten mit dem Azimutwinkel der Teilnehmerstation übereinstimmt. Gleichzeitig wird die Verzögerüngsmatrix 4 so angesteuert, daß die Antenne 6 mit einer zu der gewählten Keule 8 orthogonalen Polarisation sendet.

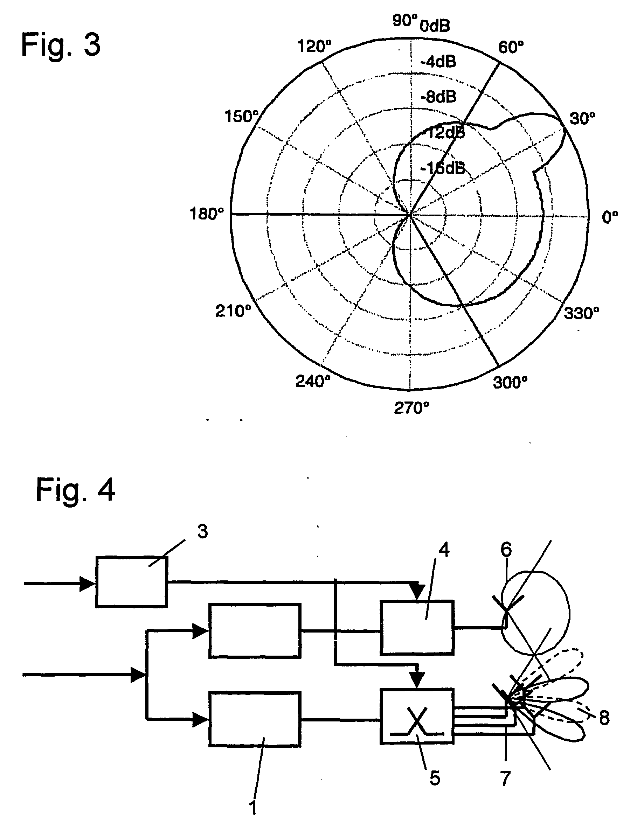

Eine resultierende Richtcharakteristik ist in Fig. 3 gezeigt. Die Keule 8 des Signals der adaptiven Antenne 7, als erstes Funksignal bezeichnet, und die cardioid-förmige Richtcharakteristik des Signals der Sektorantenne 6, als zweites Funksignal bezeichnet, überlagern sich aufgrund ihrer orthogonalen Polarisation inkohärent, so daß es nicht bei einzelnen Ausbreitungsrichtungen zur Auslöschung kommt. Durch die Bündelung des ersten Funksignals in Richtung der Teilnehmerstation MS1 kann diese die für sie bestimmten Nutzdaten sicher empfangen und decodieren. Unter anderen Azimutwinkeln zur Basisstation BS1 liegende Teilnehmerstationen empfangen das zweite Funksignal der Antenne 6, deren Sendeleistung für die meisten Richtungen, durch das Teilungsverhältnis des Leistungsteilers 2 vorgegeben, für die meisten Winkel bei dem hier betrachteten Beispiel ca. 5 dB niedriger liegt als die der adaptiven Antenne 7. Aus dieser Festlegung der Sendeleistungen von nichtgebündelter Antenne 6 und adaptiver Antenne 7 ergibt sich, daß nur im Bereich der Keule 8 in einem Paket übertragene Nutzdaten sicher decodiert werden können. Das Uplink State Flag kann jedoch von jeder Teilnehmerstation der Zelle C1 sicher empfangen werden.

Die in Fig. 4 dargestellte Variante des Sendeteils unterscheidet sich von dem der Fig. 2 darin, daß der Leistungsteiler 2 fortgelassen und stattdessen ein zweiter Hochfrequenzverstärker 1' vorgesehen ist, so daß den Antennen 6, 7 jeweils ein eigener Verstärker zugeordnet ist. Die Sendeleistung des Verstärkers 1 ist fest vorgegeben, so daß die gesamte Zelle C1 über die Antenne 6 mit einem Funksignal versorgt wird, aus dem alle Teilnehmerstationen ein Uplink State Flag extrahieren können. Die Leistung des Verstärkers 1' ist regelbar, so daß die Sendeleistung der adaptiven Antenne 7 jeweils gezielt in Abhängigkeit von der Entfernung zwischen Basisstation BS1 und der Teilnehmerstation MS1, für die die Nutzdaten des ausgestrahlten Pakets bestimmt sind, angepaßt werden kann. Im Extremfall könnte die Sendeleistung des Verstärkers 1' sogar auf 0 reduziert werden, wenn die Entfernung zwischen Basisstation BS1 und Teilnehmerstation MS1 so klein ist, daß bereits das von der nichtgebündelten Antenne 6 ausgestrahlte zweite Funksignal für eine Decodierung der Nutzdaten durch die Teilnehmerstation MS1 ausreicht.

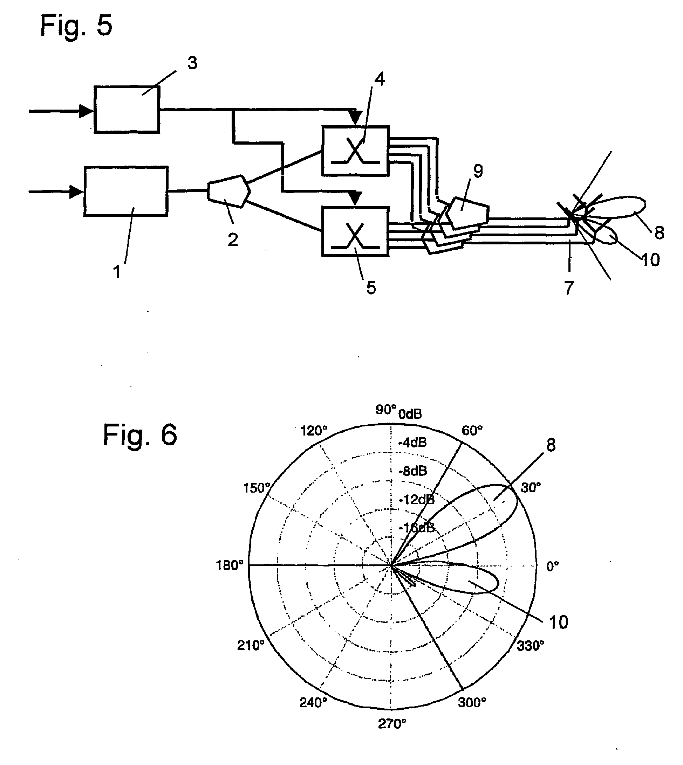

Fig. 5 zeigt eine dritte Ausgestaltung des Sendeteils, bei der die Antenne 6 entfallen ist. Stattdessen versorgt der Leistungsteiler 2 zwei Butler-Matrizen 5, 5' mit Hochfrequenzenergie, wobei die zweite Matrix 5' hier ein Viertel und die Matrix 5 drei Viertel der zur Verfügung stehenden Sendeleistung erhält. Die Ausgangssignale der zwei Butler-Matrizen 5, 5' werden über T-Stücke 9 zusammengeführt und jeweils einzelnen Elementen der adaptiven Antenne 7 zugeführt. Die Steuerung der Butler-Matrix 5 durch die Antennensteuerung 3 erfolgt in der gleichen Weise wie oben mit Bezug auf die Ausgestaltung in Fig. 2 beschrieben. Die Butler-Matrix 5' wird von der Antennensteuereinheit 3 angesteuert, um eine Keule 10 (s. Fig. 6) mit einer Hauptstrahlrichtung in Richtung einer zweiten Teilnehmerstation MS2 zu erzeugen, die im Uplink State Flag des soeben ausgestrahlten Pakets bezeichnet ist.

Fig. 6 zeigt die resultierende Richtcharakteristik, mit der bereits in Fig. 3 dargestellten starken Keule 8 in Richtung der Teilnehmerstation MS1, für die die Nutzdaten des Blocks bestimmt sind, und der zweiten, schwächeren Keule 10 in Richtung der Teilnehmerstation MS2.

Wenn, wie in Fig. 6 dargestellt, der Unterschied zwischen den Hauptstrahlrichtungen der Keulen 8 und 10 groß ist, bzw. diese Keulen nicht überlappen, dürfen sie die gleiche Polarisation aufweisen. Falls die Azimutwinkel der Stationen MS1 und MS2 sich nur geringfügig unterscheiden und die Keulen teilweise überlappen, kann es wünschenswert sein, daß sie orthogonal zueinander polarisiert sind, um destruktive Interferenz zu vermeiden. Da nämlich mit Hilfe der Butler-Matrizen 5, 5' nur diskrete, durch die Zusammenstellung der Verzögerungsstrecken der Matrizen vorgegebene Richtcharakteristiken erzeugt werden können, könnte sonst der Fall auftreten, daß die zwei Keulen 8, 10 gerade unter dem Azimutwinkel destruktiv interferieren, an dem sich die Teilnehmerstation MS2, die das Uplink State Flag empfangen muß, oder die Teilnehmerstation MS1 befindet, für die die Nutzdaten bestimmt sind.

Falls der Überlappungsbereich der einzelnen Keulen groß genug ist, kann die Ansteuerung der adaptiven Antenne auch dadurch vereinfacht werden, daß alle Keulen jeweils gleiche Polarisation erhalten. Wenn nämlich die Differenz der Azimutwinkel der Teilnehmerstationen MS1, MS2 in der Größenordnung des Öffnungswinkels einer Keule liegt, so können beide Teilnehmerstationen bereits mit der stärkeren Keule 8 des ersten Funksignals hinreichend versorgt werden; in diesem Fall kann die Ausstrahlung des zweiten Funksignals mit der Keule 10 unterbleiben. Ist die Azimutwinkeldifferenz jedoch größer, so ist es möglich, für das erste und zweite Funksignal zwei nicht überlappende Keulen zu wählen, so wie die in Fig. 6 gezeigten Keulen 8, 10, und mangels Überlappung besteht keine Gefahr der gegenseitigen Auslöschung am Ort einer der Teilnehmerstationen MS1, MS2, für die entweder die Nutzdaten oder die Steuerinformation bestimmt sind.

Selbstverständlich ist die Erfindung auch bei einer Basisstation anwendbar, die anstelle einer Auswahl unter einzelnen, durch die Butler-Matrix vorgegebenen diskreten Hauptstrahlrichtungen eine kontinuierliche Steuerung der Hauptstrahlrichtung durch Multiplizieren des auf die einzelnen Sendeelemente der adaptiven Antenne gegebenen Funksignals mit komplexen Gewichtungskoeffizienten erlaubt.

## Patentansprüche

1. Verfahren zum Übertragen von Daten zwischen einer Mehrzahl von Teilnehmerstationen (MS1, MS2) und einer Basisstation (BS1) eines Funk-Kommunikationssystems,
- bei dem die Teilnehmerstationen (MS1, MS2) einen gleichen Zeitschlitz aufeinanderfolgender Rahmen gemeinsam nutzen,
- bei dem die Basisstation (BS1) in einem gegebenen Zeitschlitz für eine erste der Teilnehmerstationen (MS1) bestimmte Nutzdaten und eine Steuerinformation für eine zweite Teilnehmerstation (MS2) überträgt,
- bei dem die Steuerinformation mit einem stärkeren Fehlerschutz codiert ist als die Nutzdaten,
- bei dem einem Funksignal, das im gegebenen Zeitschlitz gerichtet an die erste Teilnehmerstation (MS1) ausgestrahlt wird, ein zweites Funksignal überlagert wird,
- bei dem die Sendeleistung des zweiten Funksignals in Richtung der zweiten Teilnehmerstation (MS2) soweit reduziert wird, dass ein korrekter Empfang der Steuerinformation ermöglicht wird,
**dadurch gekennzeichnet,**
- **dass** die Sendeleistung des zweiten Funksignals soweit reduziert wird, dass diese für einen korrekten Empfang der Nutzdaten des gegebenen Zeitschlitzes an der zweiten Teilnehmerstation (MS2) nicht ausreicht.

2. Verfahren nach Anspruch 1, **dadurch gekennzeichnet, dass** die Steuerinformation eine Bezeichnung derjenigen Teilnehmerstation (MS2) enthält, die in einem entsprechenden Zeitschlitz eines nachfolgenden Rahmens Daten senden darf.

3. Verfahren nach Anspruch 1 oder 2, **dadurch gekennzeichnet, dass** die Steuerinformation eine Information über die von der zweiten Teilnehmerstation zu verwendende Sendeleistung umfasst.

4. Verfahren nach einem der Ansprüche 1 bis 3, **dadurch gekennzeichnet, dass** das zweite Funksignal die ganze Zelle (C1) der Basisstation (BS1) überstreicht.

5. Verfahren nach einem der Ansprüche 1 bis 3, **dadurch gekennzeichnet, dass** das zweite Funksignal in Richtung der zweiten Teilnehmerstation (MS2) gebündelt ist.

6. Verfahren nach einem der Ansprüche 1 bis 5, **dadurch gekennzeichnet, dass** die Sendeleistung in Richtung der zweiten Teilnehmerstation (MS2) um 3 dB bis 15 dB geringer als in Richtung der ersten Teilnehmerstation (MS1) ist.

7. Verfahren nach einem der Ansprüche 1 bis 6, **dadurch gekennzeichnet, dass** erstes und zweites Funksignal orthogonale Polarisation aufweisen.

8. Verfahren nach einem der Ansprüche 1 bis 6, **dadurch gekennzeichnet, dass** erstes und zweites Funksignal gerichtet sind und gleiche Polarisation aufweisen.

9. Basisstation für ein Funk-Kommunikationssystem
- mit Mitteln zum Übertragen von Daten zwischen einer Mehrzahl von Teilnehmerstationen (MS1, MS2) und der Basisstation (BS1), wobei die Teilnehmerstationen (MS1, MS2) einen gleichen zeitschlitz aufeinanderfolgender Rahmen gemeinsam nutzen, wobei die Basisstation (BS1) in einem gegebenen Zeitschlitz für eine erste der Teilnehmerstationen (MS1) bestimmte Nutzdaten und eine Steuerinformation für eine zweite Teilnehmerstation (MS2) überträgt, wobei die Steuerinformation mit einem stärkeren Fehlerschutz codiert ist als die Nutzdaten,
- mit einer an eine Sendesignalquelle angeschlossenen adaptiven Antenne (7) zum gebündelten Ausstrahlen eines ersten Funksignals, wobei das Funksignal im gegebenen zeitschlitz gerichtet an die erste Teilnehmerstation (MS1) ausgestrahlt wird,
- mit einer zusätzlichen Antenne zum ungebündelten Ausstrahlen eines zweiten Funksignals, das dem ersten Funksignal überlagert wird,
**dadurch gekennzeichnet,**
- **dass** die zusätzliche Antenne an die gleiche Sendesignalquelle angeschlossen ist und eine derart geringere Sendeleistung als die adaptive Antenne (7) aufweist, so dass die Sendeleistung des zweiten Funksignals in Richtung der zweiten Teilnehmerstation (MS2) soweit reduziert wird, dass einerseits ein korrekter Empfang der Steuerinformation ermöglicht wird und dass andererseits die Sendeleistung einen korrekten Empfang der Nutzdaten des gegebenen Zeitschlitzes an der zweiten Teilnehmerstation (MS2) nicht ausreicht.

10. Basisstation nach Anspruch 9, **dadurch gekennzeichnet, dass** die Hauptstrahlrichtungen der zwei Funksignale unterschiedlich sind.

11. Basisstation nach Anspruch 9 oder 10, **dadurch gekennzeichnet, dass** sie eingerichtet ist, das erste und das zweite Funksignal jeweils orthogonal zueinander polarisiert auszustrahlen.

12. Basisstation nach Anspruch 9, **dadurch gekennzeichnet, dass** die zusätzliche Antenne (6) und die adaptive Antenne (7) zum Ausstrahlen von Funksignalen in jeweils zwei orthogonalen Polarisationen ausgebildet sind.

13. Basisstation nach Anspruch 9, **dadurch gekennzeichnet, dass** sie eingerichtet ist, das erste und das zweite Funksignal nicht überlappend und gleich polarisiert auszustrahlen.

14. Basisstation nach einem der Ansprüche 9 bis 13, **dadurch gekennzeichnet, dass** die Sendeleistung des zweiten Funksignals zwischen 3 bis 15 dB geringer ist als die des ersten Funksignals.

## Claims

1. Method for transmitting data between a number of subscriber stations (MS1, MS2) and a base station (BS1) in a radio communications system,
- wherein the subscriber stations (MS1, MS2) use the same time slot in successive frames jointly,
- wherein the base station (BS1) transmits payload data, which is intended for a first of the subscriber stations (MS1), and control information for a second subscriber station (MS2) in a given time slot,
- wherein the control information is coded with stronger error protection than the payload data,
- wherein a second radio signal is superimposed on a radio signal, which is transmitted in the direction of the first subscriber station (MS1) in the given time slot,
- wherein the transmission power of the second radio signal in the direction of the second subscriber station (MS2) is reduced to such an extent that correct reception of the control information is enabled,
**characterised in that**
- the transmission power of the second radio signal is reduced to such an extent that it is not sufficient for correct reception of the payload data of the given time slot at the second subscriber station (MS2).

2. Method according to claim 1, **characterised in that** the control information contains an identification for that subscriber station (MS2), which may transmit data in a corresponding time slot of a subsequent frame.

3. Method according to claim 1 or 2, **characterised in that** the control information comprises information relating to the transmission power to be used by the second subscriber station.

4. Method according to one of claims 1 to 3, **characterised in that** the second radio signal covers the entire cell (C1) of the base station (BS1).

5. Method according to one of claims 1 to 3, **characterised in that** the second radio signal is bundled in the direction of the second subscriber station (MS2).

6. Method according to one of claims 1 to 5, **characterised in that** the transmission power in the direction of the second subscriber station (MS2) is 3 dB to 15 dB less than in the direction of the first subscriber station (MS1).

7. Method according to one of claims 1 to 6, **characterised in that** the first and second radio signals have orthogonal polarisations.

8. Method according to one of claims 1 to 6, **characterised in that** the first and second radio signals are directional and have the same polarisation.

9. Base station for a radio communications system
- with means for transmitting data between a number of subscriber stations (MS1, MS2) and the base station (BS1), with the subscriber stations (MS1, MS2) using the same time slot in successive frames jointly, with the base station (BS1) transmitting payload data, which is intended for a first of the subscriber stations (MS1), and control information for a second subscriber station (MS2) in a given time slot, with the control information being coded with stronger error protection than the payload data,
- with an adaptive antenna (7) connected to a transmission signal source for the bundled transmission of a first radio signal, with the radio signal being transmitted in the direction of the first subscriber station (MS1) in the given time slot,
- with an additional antenna for the unbundled transmission of a second radio signal, which is superimposed on the first radio signal,
**characterised in that**
- the additional antenna is connected to the same transmission signal source and has a lower transmission power than the adaptive antenna (7), so that the transmission power of the second radio signal in the direction of the second subscriber station (MS2) is reduced to such an extent that on the one hand correct reception of the control information is enabled and on the other hand the transmission power is not sufficient for correct reception of the payload data of the given time slot at the second subscriber station (MS2).

10. Base station according to claim 9, **characterised in that** the main radiation directions of the two radio signals are different.

11. Base station according to claim 9 or 10, **characterised in that** it is set up to transmit the first and second radio signals such they are each polarised orthogonally with respect to one another.

12. Base station according to claim 9, **characterised in that** the additional antenna (6) and the adaptive antenna (7) are configured for transmitting radio signals with two orthogonal polarisations respectively.

13. Base station according to claim 9, **characterised in that** it is set up to transmit the first and second radio signals such that they are not overlapping and have the same polarisation.

14. Base station according to one of claims 9 to 13, **characterised in that** the transmission power of the second radio signal is between 3 and 15 dB less than that of the first radio signal.

## Revendications

1. Procédé de transmission de données entre une pluralité de stations d'abonné (MS1, MS2) et une station de base (BS1) d'un système de radiocommunication, dans lequel
- les stations d'abonné (MS1, MS2) utilisent en commun un même créneau temporel de trames successives,
- la station de base (BS1) transmet, dans un créneau temporel donné, des données utiles destinées à une première des stations d'abonné (MS1) et une information de commande pour une deuxième station d'abonné (MS2),
- l'information de commande est codée avec une protection contre les erreurs plus forte que pour les données utiles,
- un deuxième signal radio se superpose à un signal radio qui est émis dans le créneau temporel donné en direction de la première station d'abonné (MS1),
- la puissance d'émission du deuxième signal radio en direction de la deuxième station d'abonné (MS2) est réduite dans une mesure telle qu'une réception correcte de l'information de commande est rendue possible,
**caractérisé en ce que**
- la puissance d'émission du deuxième signal radio est réduite dans une mesure telle que celle-ci ne suffit pas pour une réception correcte des données utiles du créneau temporel donné au niveau de la deuxième station d'abonné (MS2).

2. Procédé selon la revendication 1, **caractérisé en ce que** l'information de commande contient une désignation de la station d'abonné (MS2) qui peut émettre des données dans un créneau temporel correspondant d'une trame suivante.

3. Procédé selon la revendication 1 ou 2, **caractérisé en ce que** l'information de commande comprend une information sur la puissance d'émission à utiliser par la deuxième station d'abonné.

4. Procédé selon l'une des revendications 1 à 3, **caractérisé en ce que** le deuxième signal radio balaie toute la cellule (C1) de la station de base (BS1).

5. Procédé selon l'une des revendications 1 à 3, **caractérisé en ce que** le deuxième signal radio est concentré en direction de la deuxième station d'abonné (MS2).

6. Procédé selon l'une des revendications 1 à 5, **caractérisé en ce que** la puissance d'émission en direction de la deuxième station d'abonné (MS2) est de 3 dB à 15 dB inférieure à celle en direction de la première station d'abonné (MS1).

7. Procédé selon l'une des revendications 1 à 6, **caractérisé en ce que** le premier et le deuxième signal radio présentent une polarisation orthogonale.

8. Procédé selon l'une des revendications 1 à 6, **caractérisé en ce que** le premier et le deuxième signal radio sont orientés et présentent une même polarisation.

9. Station de base pour un système de radiocommunication, avec
- des moyens permettant de transmettre des données entre une pluralité de stations d'abonné (MS1, MS2) et une station de base (BS1), les stations d'abonné (MS1, MS2) utilisant en commun un même créneau temporel de trames successives, la station de base (BS1) transmettant, dans un créneau temporel donné, des données utiles destinées à une première des stations d'abonné (MS1) et une information de commande pour une deuxième station d'abonné (MS2), l'information de commande étant codée avec une protection contre les erreurs plus forte que pour les données utiles,
- une antenne adaptative (7) connectée à une source de signaux d'émission pour l'émission concentrée d'un premier signal radio, le signal radio étant émis dans le créneau temporel donné en direction de la première station d'abonné (MS1), un deuxième signal radio se superpose à un signal radio qui est émis dans le créneau temporel donné en direction de la première station d'abonné (MS1),
- une antenne supplémentaire pour l'émission non concentrée d'un deuxième signal radio qui se superpose au premier signal radio,
**caractérisée en ce que**
l'antenne supplémentaire est connectée à la même source de signaux d'émission et présente une puissance d'émission inférieure à celle de l'antenne adaptative (7) de manière telle que la puissance d'émission du deuxième signal radio en direction de la deuxième station d'abonné (MS2) est réduite dans une mesure telle que, d'une part, une réception correcte de l'information de commande est rendue possible et que, d'autre part, la puissance d'émission ne suffit pas pour une réception correcte des données utiles du créneau temporel donné au niveau de la deuxième station d'abonné (MS2).

10. Station de base selon la revendication 9, **caractérisée en ce que** les directions d'émission principales des deux signaux radio sont différentes.

11. Station de base selon la revendication 9 ou 10,
**caractérisée en ce qu'**elle est aménagée pour émettre le premier et le deuxième signal radio respectivement de manière polarisée orthogonalement l'un par rapport à l'autre.

12. Station de base selon la revendication 9, **caractérisée en ce que** l'antenne supplémentaire (6) et l'antenne adaptative (7) sont réalisées pour émettre des signaux radio dans à chaque fois deux polarisations orthogonales.

13. Station de base selon la revendication 9, **caractérisée en ce qu'**elle est aménagée pour émettre le premier et le deuxième signal radio de manière non chevauchante et identiquement polarisée.

14. Station de base selon l'une des revendications 9 à 13, **caractérisée en ce que** la puissance d'émission du deuxième signal radio est de 3 dB à 15 dB inférieure à celle du premier signal radio.
